# EUROPEAN PATENT SPECIFICATION

(11) **EP 4 303 074 B1**
(45) Date of publication and mention of the grant of the patent: **18.12.2024**
(21) Application number: 22187198.1
(22) Date of filing: 27.07.2022
(51) Int. Cl.: B60Q 1/04, B60Q 1/26, F16B 9/00, F16B 2/10, F16B 7/20

(54) **VEHICLE LIGHT FIXTURE AND BRACKET STRUCTURE THEREOF**
FAHRZEUGLEUCHTE UND KLAMMERSTRUKTUR DAFÜR
DISPOSITIF D'ÉCLAIRAGE DE VÉHICULE ET SA STRUCTURE DE SUPPORT

(30) Priority: 04.07.2022 TW 111124982
(43) Date of publication of application: 10.01.2024
(73) Proprietor: Kang, Ting-Kai, 704 Tainan City (TW)
(72) Inventor: Kang, Ting-Kai, 704 Tainan City (TW)
(74) Representative: Viering, Jentschura & Partner mbB Patent- und Rechtsanwälte

(56) References cited:
- EP-A2- 1 813 476
- GB-A- 2 364 739
- US-A1- 2013 187 395
- US-A1- 2019 092 418
- US-A1- 2021 039 734

## Description

### FIELD OF THE INVENTION

The present invention relates to a vehicle light fixture adapted to be mounted to a vehicle body with the vehicle light fixture comprising a bracket structure. After the front tube and the two side tubes of the bracket structure are assembled, the bracket structure can be applied to various vehicles.

### BACKGROUND OF THE INVENTION

Goods can be shipped anywhere in the world by air, sea or land. In areas with a large land area, such as Europe or the Americas, although land transportation takes a long time, the cost is relatively low compared to air transportation. The two main forms of land transportation can be considered to be rail transportation and road transportation. Road transportation is a type of transportation using roads by semi-trailer truck, tractor trailer or truck. Vehicles go back and forth on the roads. Due to the vast land area, in some special places, such as forests or mountains, the roads in forests or mountains do not have enough street lights to provide illumination. The roof or front edge of a semi-trailer truck, tractor trailer or truck may be provided a light fixture for providing enough illumination.

In the prior art, for installing vehicle lights on the roof of a vehicle, it is required to manufacture a special integrated light assembly to match the shape of the front edge or roof of the vehicle. Therefore, each type of vehicle needs to be equipped with a suitable light assembly. Inevitably, manufacturers of vehicle lights will increase production costs when they stock or produce vehicle lights. It is also a big problem in product management or parts manufacturing.

EP 1 813 476 concerns an arrangement for lorries for mounting accessories, in particular lamps, including a tubular bracket and fixing means for securing the bracket to the cab of the lorry.

US 2013/187395 relates to an adjustable, modular automotive grille guard assembly.

### SUMMARY OF THE INVENTION

The present invention and its preferred embodiments are apparent from the appendant set of claims.

The present invention relates to a vehicle light fixture. The vehicle light fixture is adapted to be mounted to a vehicle body. The vehicle light fixture comprises a bracket structure and at least one vehicle light. The bracket structure comprises a front tube, two side tubes, and at least one support member. The front tube extends along its axis and has two opposite ends. The two side tubes are disposed at the two opposite ends of the front tube. At least one of the two side tubes is detachably connected to one of the two opposite ends of the front tube. The support member is disposed on the front tube. The front tube is fixed to the vehicle body via the support member. The vehicle light is disposed on the front tube. The two side tubes are detachably connected to the two opposite ends of the front tube, respectively. The front tube is a hollow circular tube. The front tube has a groove. The groove extends along the axis. The bracket structure further comprises at least one tube fastener. The tube fastener has a sleeve portion and a locking portion connected to the sleeve portion. A protrusion is disposed on an inner wall of the sleeve portion. The sleeve portion of the tube fastener is sleeved on the front tube. The protrusion is inserted in the groove. The tube fastener is adjustable in position. The vehicle light is locked to the locking portion. The sleeve portion is tightened on the front tube by the locking portion.

Preferably, the at least one of the two side tubes has an opening. The one of the two opposite ends of the front tube is inserted into the opening for the at least one of the two side tubes to be detachably connected to the one of the two opposite ends of the front tube.

Preferably, the one of the two opposite ends of the front tube has an engaging groove. The engaging groove has an L shape. The engaging groove includes a guide portion and an engaging portion communicating with the guide portion. A protruding block is disposed on the at least one of the two side tubes and is adjacent to the opening. When the one of the two opposite ends of the front tube is inserted in the opening, the protruding block is moved along the guide portion to be engaged in the engaging portion, so that the at least one of the two side tubes is detachably connected to the one of the two opposite ends of the front tube.

According to the above technical features, the following effects can be achieved:
1. The front tube and the side tubes are manufactured separately before assembly. The length of the segmented bracket structure is shortened so that the bracket structure can be machined easily, which can reduce the manufacturing cost.
2. The front tube and the side tubes are manufactured separately before assembly. This can reduce the space occupied by the bracket structure in transportation and packaging, which can reduce the transportation cost and the storage space of the inventory greatly.
3. The power cord of the vehicle light is inserted in the front tube from the corresponding first wire hole to either end of the front tube, and then is inserted in the side tube and comes out from the second wire hole of the side tube. In this way, the difficulty in inserting the power cord in the front tube or the side tubes can be reduced.
4. The present invention can match the shape of the roof of any vehicle by replacing the front tube having a different length or the side tube having a different angle. Thus, the flexibility of the use of parts is improved, and the number of parts can be reduced. The present invention can be applied to various types of vehicles.

### BRIEF DESCRIPTION OF THE DRAWINGS

FIG. 1 is a perspective view of the vehicle light fixture of the present invention;
FIG. 2 is an exploded view of the vehicle light fixture of the present invention;
FIG. 3 is a schematic view of the tube fasteners mounted to the front tube of the present invention;
FIG. 4 is a cross-sectional view of the tube fasteners mounted to the front tube of the present invention;
FIG. 5 is a rear view of the vehicle lights mounted to the respective tube fasteners of the present invention;
FIG. 5A is a side view of the vehicle lights mounted to the respective tube fasteners of the present invention;
FIG. 6 is a schematic view of the side tube to be assembled to one end of the front tube of the present invention;
FIG. 6A is a schematic view of the moving path of the protruding block when the side tube is to be assembled to one end of the front tube of the present invention;
FIG. 7 is a schematic view of the side tube connected to one end of the front tube of the present invention;
FIG. 7A is a cross-sectional view of the side tube connected to one end of the front tube of the present invention;
FIG. 8 is a partial perspective view, illustrating that the first support member, the connecting member and the second support member are mounted to the front tube and the side tube;
FIG. 8A is a partial cross-sectional view, illustrating that the first support member and the connecting member are mounted to the front tube;
FIG. 8B is a partial perspective view, illustrating that the second support member is mounted to the side tube;
FIG. 9 is a schematic view of the vehicle light fixture installed on the front edge of the vehicle body according to a first embodiment of the present invention;
FIG. 10 is another schematic view of the vehicle light fixture installed on the front edge of the vehicle body according to the first embodiment of the present invention;
FIG. 11 is a perspective view of the vehicle light fixture according to a second embodiment of the present invention; and
FIG. 12 is a schematic view of the vehicle light fixture installed on the roof of the vehicle body according to the second embodiment of the present invention.

### DESCRIPTION OF THE PREFERRED EMBODIMENTS

Embodiments of the present invention will now be described, by way of example only, with reference to the accompanying drawings.

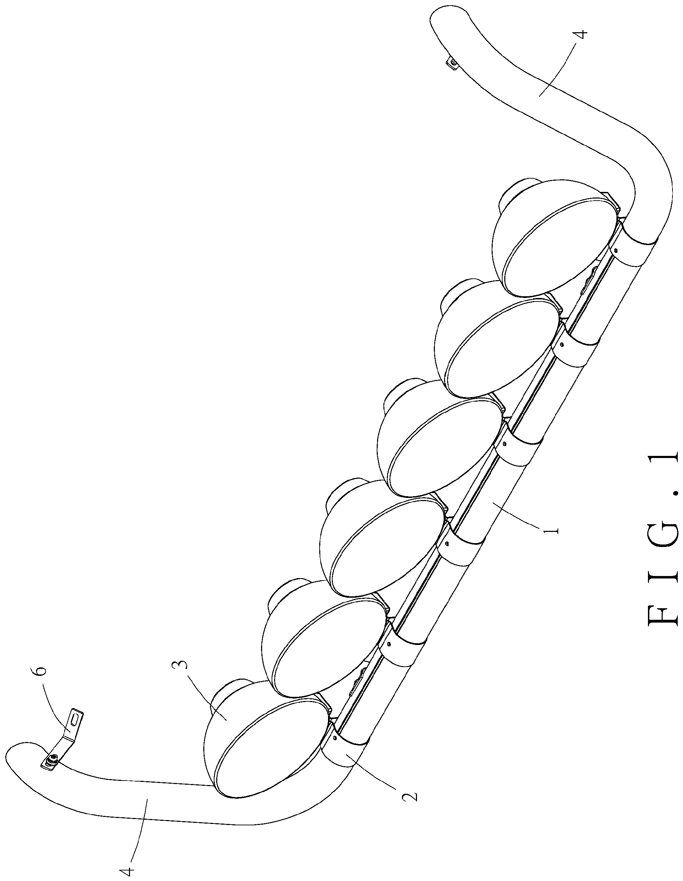

Referring to FIG. 1, the present invention discloses a vehicle light fixture, comprising a bracket structure and a plurality of vehicle lights 3.

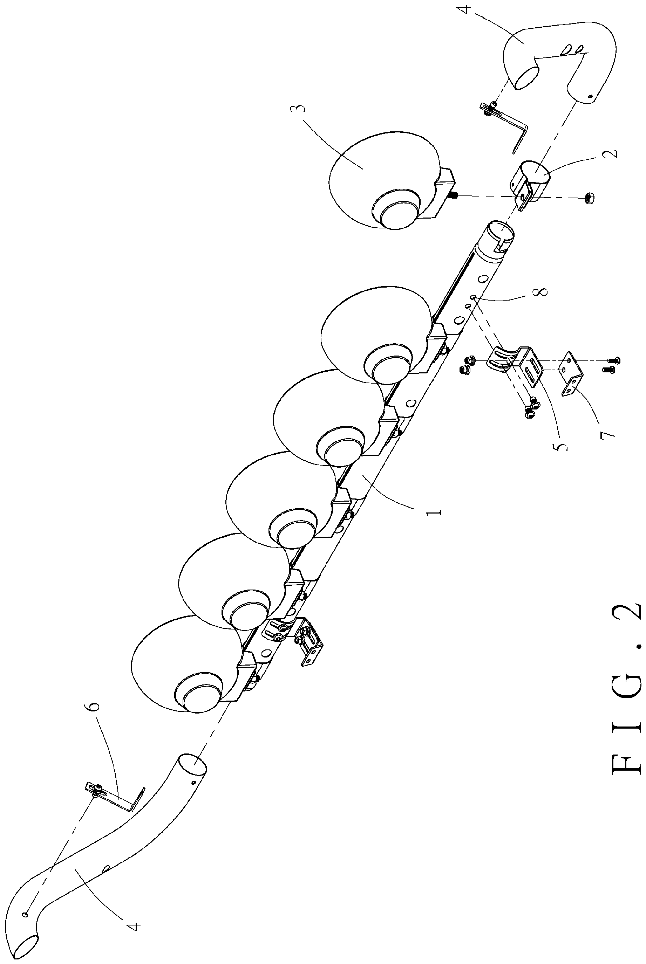

Please refer to FIG. 1 and FIG. 2. The bracket structure includes a front tube 1, two side tubes 4 detachably connected to the front tube 1, a plurality of tube fasteners 2, a plurality of first support members 5, a plurality of connecting members 7, and a plurality of second support members 6.

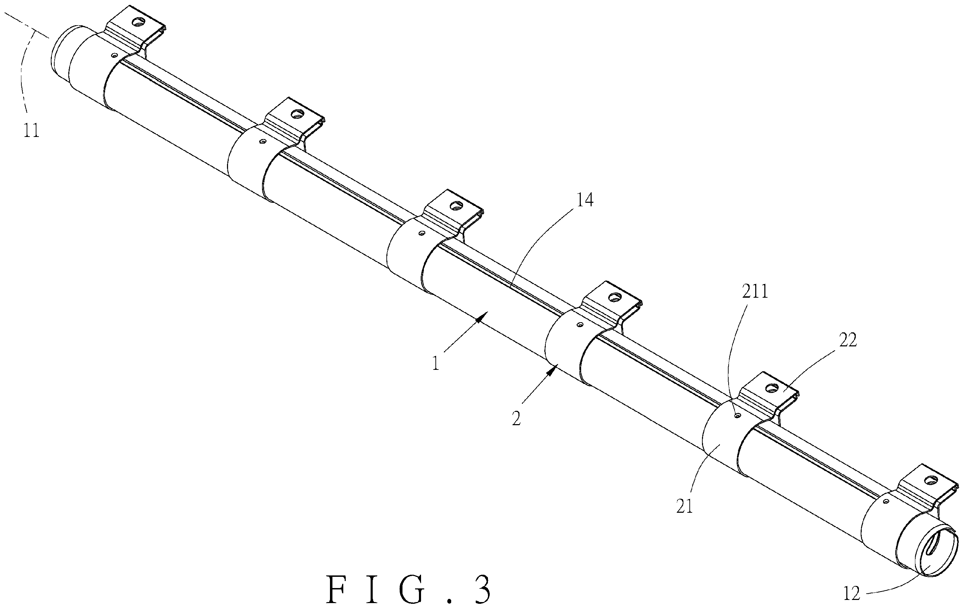

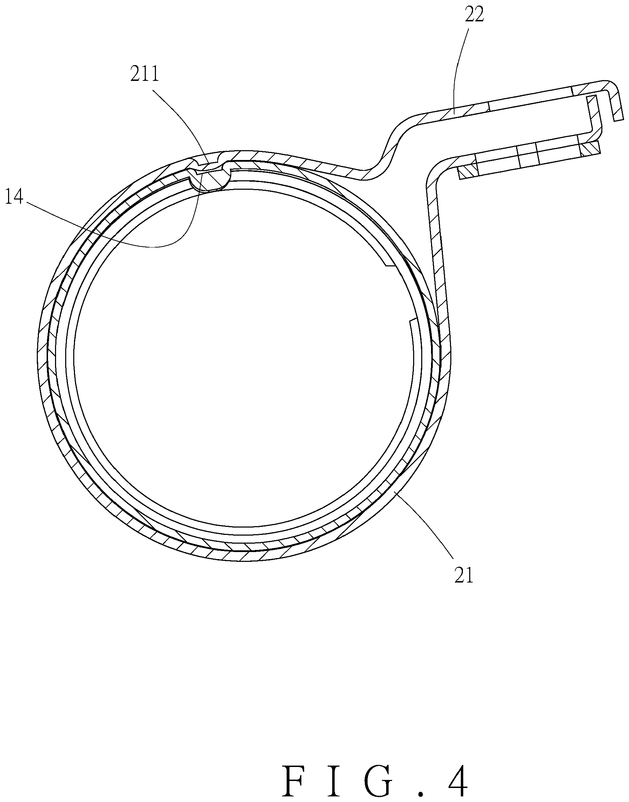

Please refer to FIG. 3 and FIG. 4. The front tube 1 is a hollow circular tube. The front tube 1 extends along its axis 11 and has two first openings 12 at two opposite ends thereof. The first openings 12 communicate with each other. The front tube 1 has a groove 14 and a plurality of first wire holes 15. The groove 14 extends along the axis 11 and is disposed on the outer wall of the front tube 1. The first wire holes 15 are disposed on the outer wall of the front tube 1 and are arranged in sequence along the direction of the axis 11 and communicate with the first openings 12. Each tube fastener 2 has a sleeve portion 21 and a locking portion 22 connected to the sleeve portion 21. The inner wall of the sleeve portion 21 has a protrusion 211. The sleeve portion 21 of the tube fastener 2 is movably sleeved on the front tube 1. The tube fasteners 21 are arranged on the front tube 1 in sequence along the direction of the axis 11 and are adjustable in position. The protrusion 211 is inserted and engaged in the groove 14, so that the tube fastener 2 can be moved only along the direction of the axis 11, and the sleeve portion 21 of the tube fastener 2 will not rotate relative to the outer wall of the front tube 1. The locking portion 22 is configured to tighten and secure the sleeve portion 21 of the tube fastener 2 to the front tube 1.

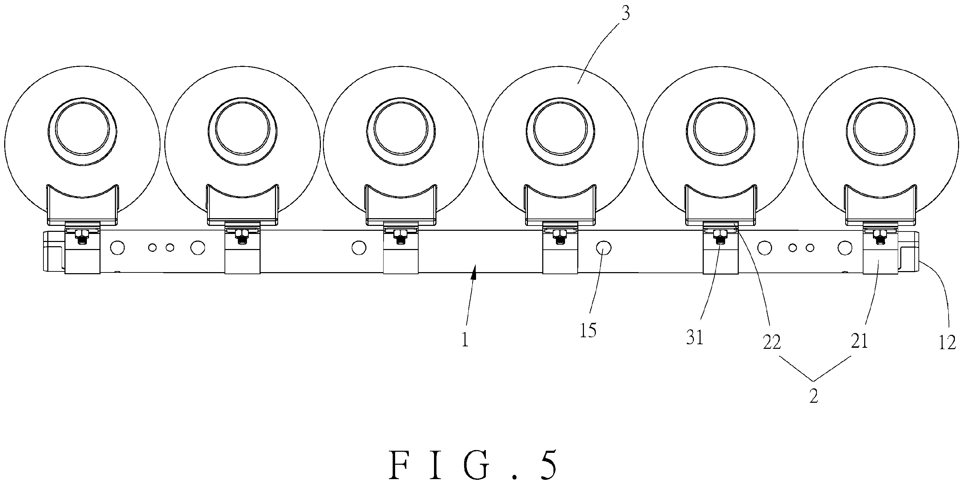

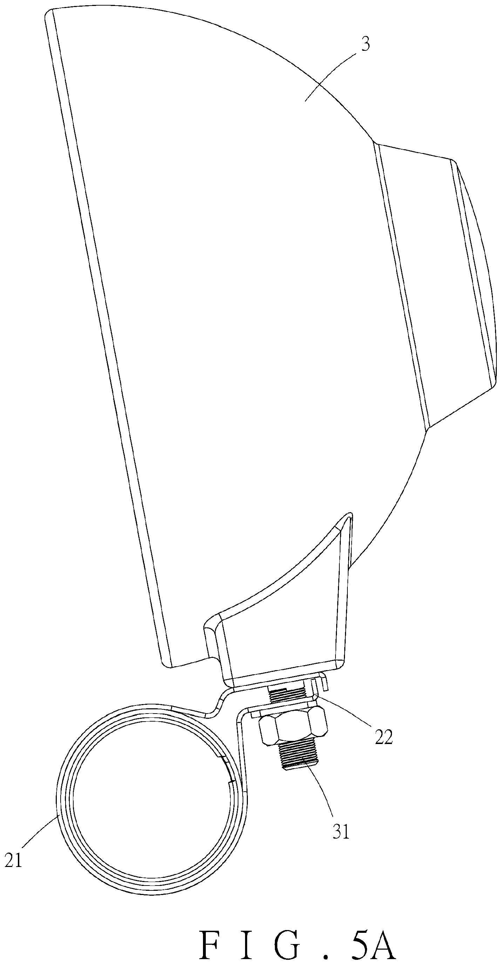

Please refer to FIG. 5 and FIG. 5A. The vehicle lights 3 are disposed on the front tube 1 through the respective tube fasteners 2. Specifically, each vehicle light 3 has a threaded portion 31. The threaded portion 31 of the vehicle light 3 is locked to the locking portion 22 of the tube fastener 2. In this way, in addition to locking the vehicle light 3 on the tube fastener 2, the locking portion 22 also tightens and secures the sleeve portion 21 of the tube fastener 2 on the front tube 1. The power cord of each vehicle light 3 is inserted into the front tube 1 from the corresponding first wire hole 15, and then comes out of the front tube 1 via either first opening 12 at the two opposite ends of the front tube 1.

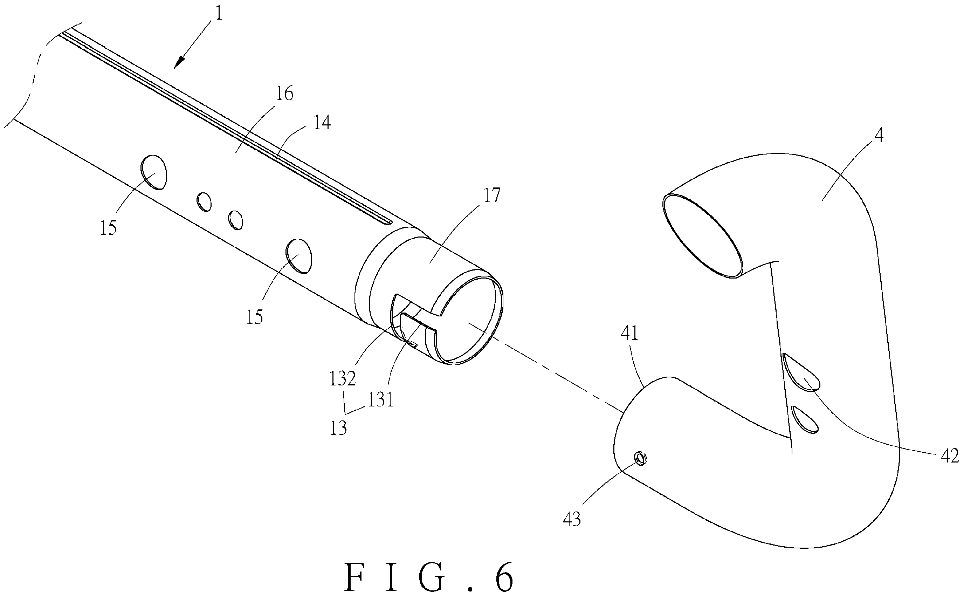

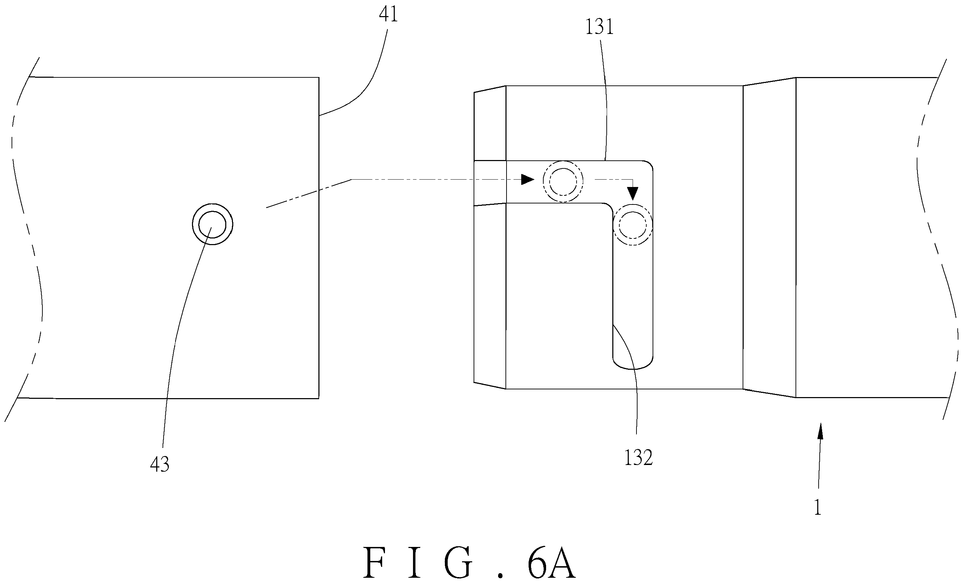

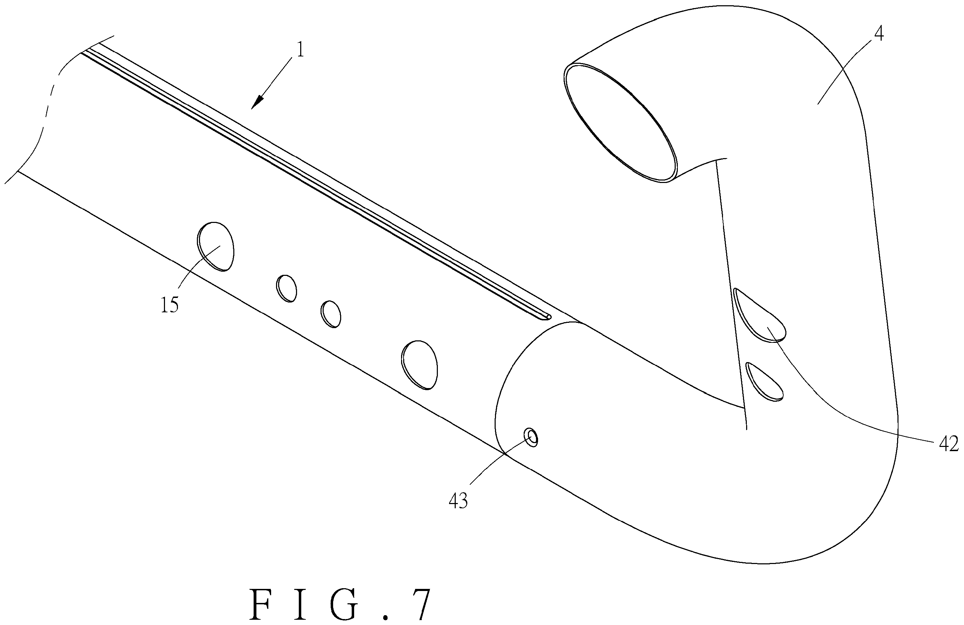

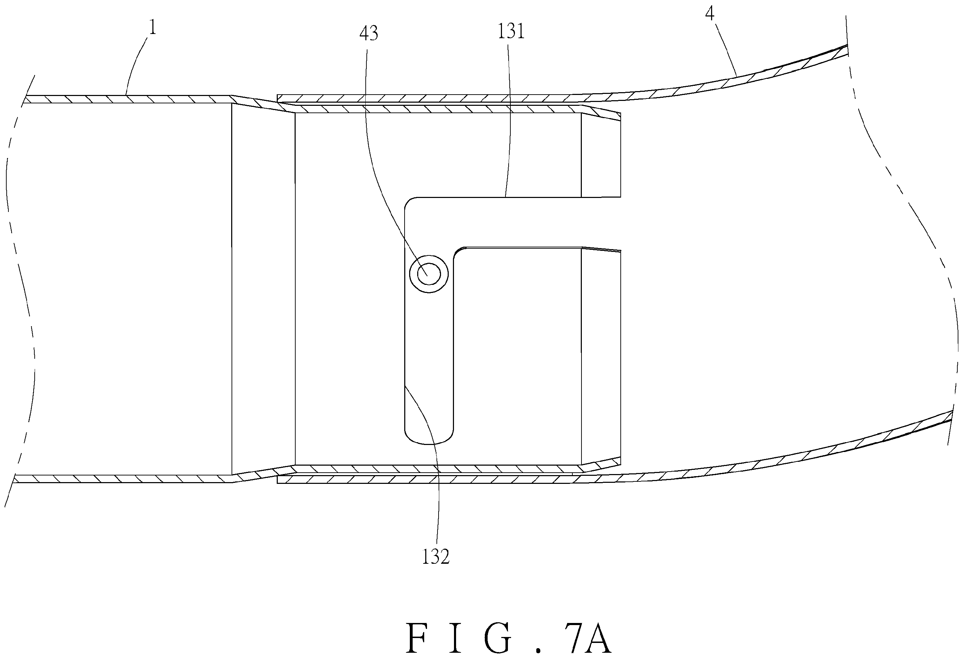

Please refer to FIG. 6, FIG. 6A, FIG. 7, and FIG. 7A. Either end of the front tube 1 has an engaging groove 13. The engaging groove 13 is disposed on the outer wall of the front tube 1 and is adjacent to the end of the front tube 1. The engaging groove 13 has an L shape, including a guide portion 131 and an engaging portion 132 communicating with the guide portion 131. Specifically, the front tube 1 has a first section 16 and a second section 17 extending from the first section 16 and located at either end of the front tube 1. The first wire holes 15 are disposed on the outer wall of the first section 16. The outer diameter of the second section 17 is less than the outer diameter of the first section 16. The guide portion 131 is parallel to the axis 11. The engaging portion 132 is perpendicular to the axis 11. The side tube 4 is a hollow circular tube, and has a second opening 41 and a plurality of second wire holes 42. The second opening 41 communicates with the second wire holes 42. A protruding block 43 is disposed on the inner wall of the side tube 4. The protruding block 43 is adjacent to the second opening 41. Specifically, when the side tubes 4 are respectively sleeved on the two opposite ends of the front tube 1, the two opposite ends of the front tube 1 are inserted in the second openings 41 of the side tubes 4, respectively. The protruding block 43 provided on the side tube 4 slides into the guide portion 131 and moves to the engaging portion 132 along the guide portion 131, such that the side tube 4 is detachably connected to either end of the front tube 1.

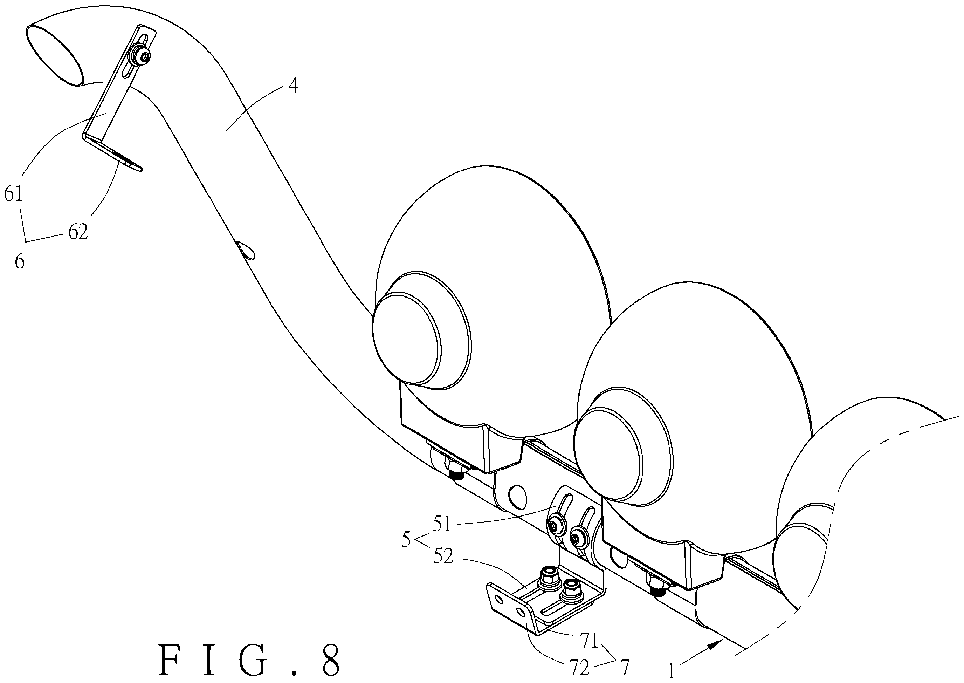

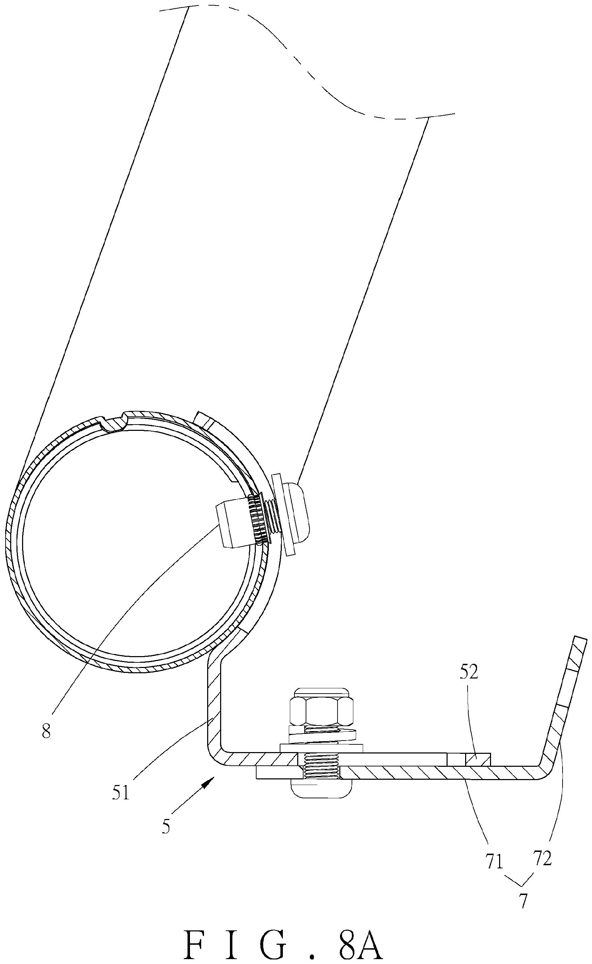

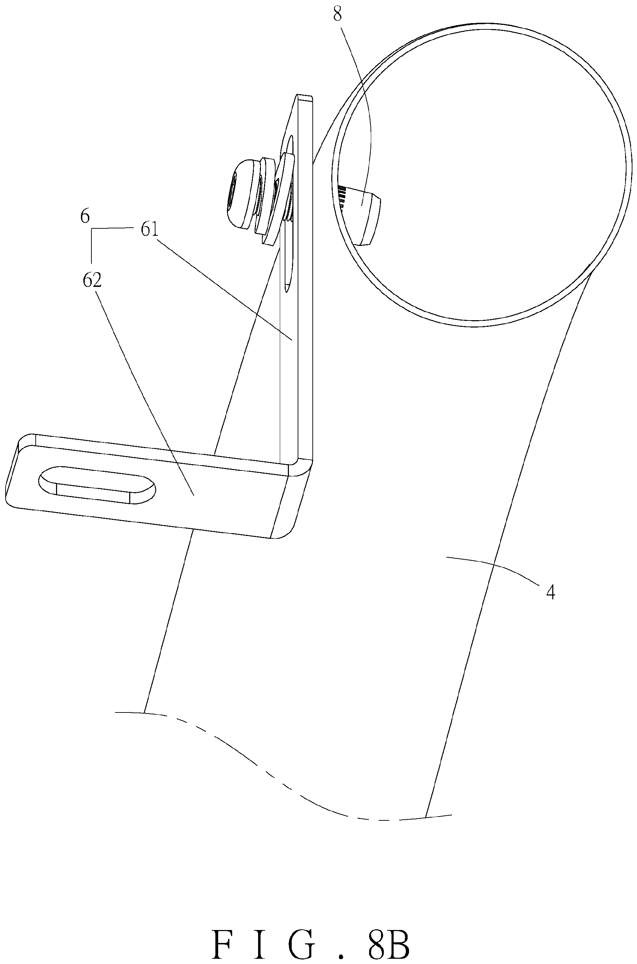

In FIG. 8, FIG. 8A, and FIG. 8B, which are not according to the present invention, the first support member 5 has a curved portion 51 and a flat portion 52 extending from one end of the curved portion 51. The curved portion 51 is movably attached to the outer wall of the front tube 1. The connecting member 7 is attached to the first support member 5. The connecting member 13 has an L shape, including a first end 71 and a second end 72 connected to the first end 71. The first end 71 is coupled to the flat portion 52, for example, with a screw. Specifically, a plurality of blind nuts 8 are provided on the inner surface of the front tube 1, and the first support members 5 and the front tube 1 are coupled with screws. The second support member 6 has an upright portion 61 and a horizontal portion 62 connected to the upright portion 61. A 90-degree angle is defined between the upright portion 61 and the horizontal portion 62. Specifically, a plurality of blind nuts 8 are provided on the inner surface of the front tube 1. The upright portion 61 of the second support member 6 and the side tube 4 are coupled with screws.

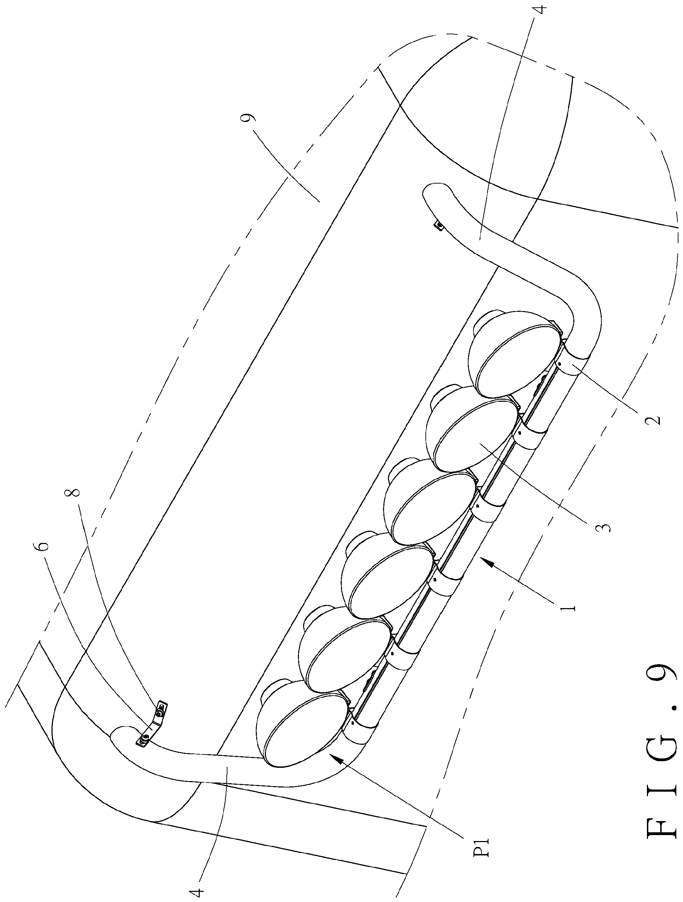

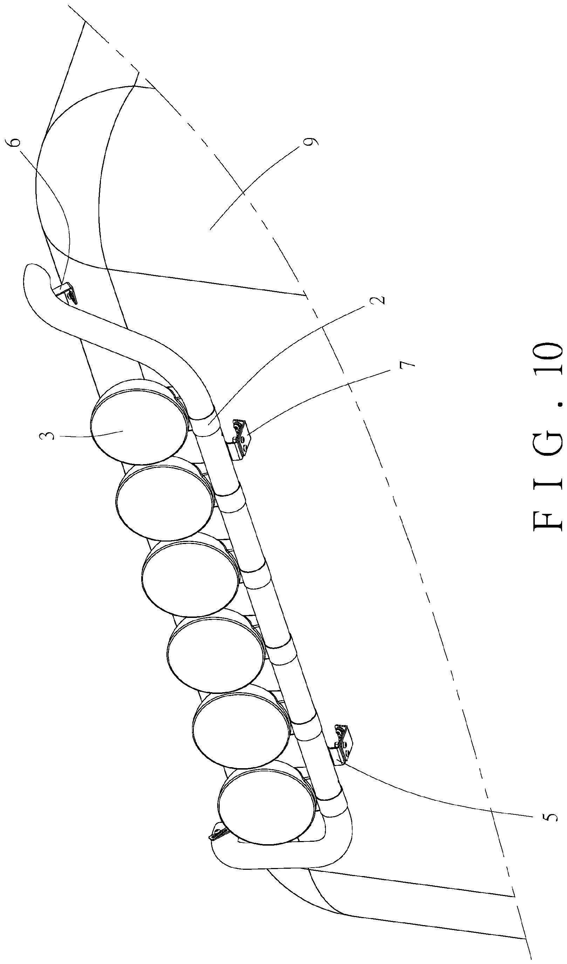

Please refer to FIG. 9 and FIG. 10. In the first embodiment of the present invention, the vehicle light 3 is first assembled and mounted to the bracket structure, and the vehicle light 3 is adjusted to a desired first position P1. The assembled vehicle light 3 and the bracket structure are installed on the front edge near the roof of a vehicle body 9 through the first support member 5, the second support member 6 and the connecting member 7. Specifically, the front tube 1 is fixed to the front edge near the roof of the vehicle body 9 via the first support members 5 and the connecting members 7, and then the side tubes 4 are fixed on both sides of the front edge of the vehicle body 9 via the second support members 6. Thus, the vehicle lights 3 illuminate the road in front of the vehicle body 9, thereby increasing the field of vision while driving on the road and improving driving safety, or providing sufficient illumination in the process of operation.

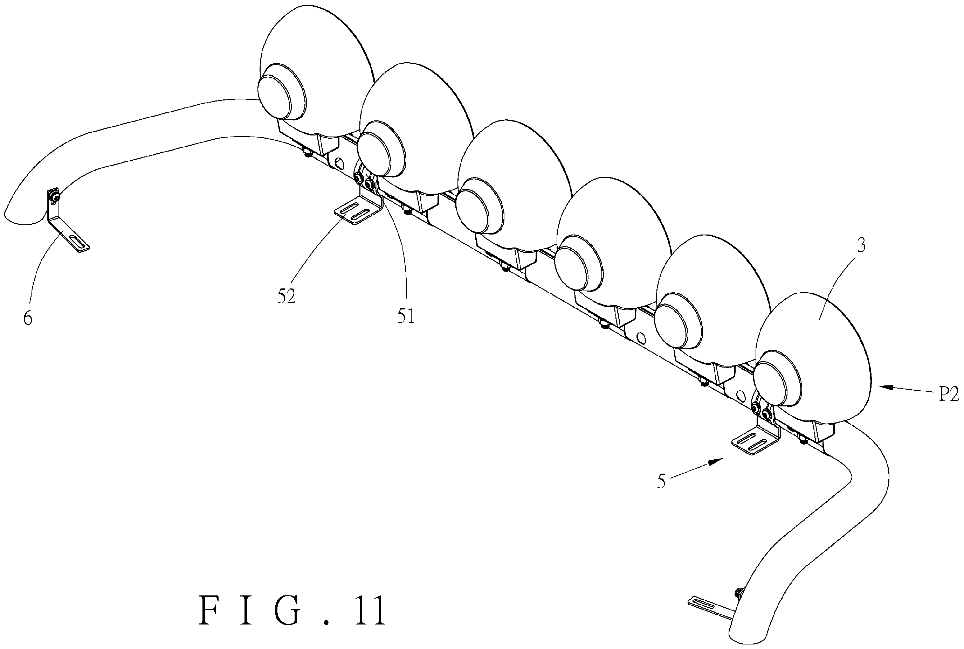

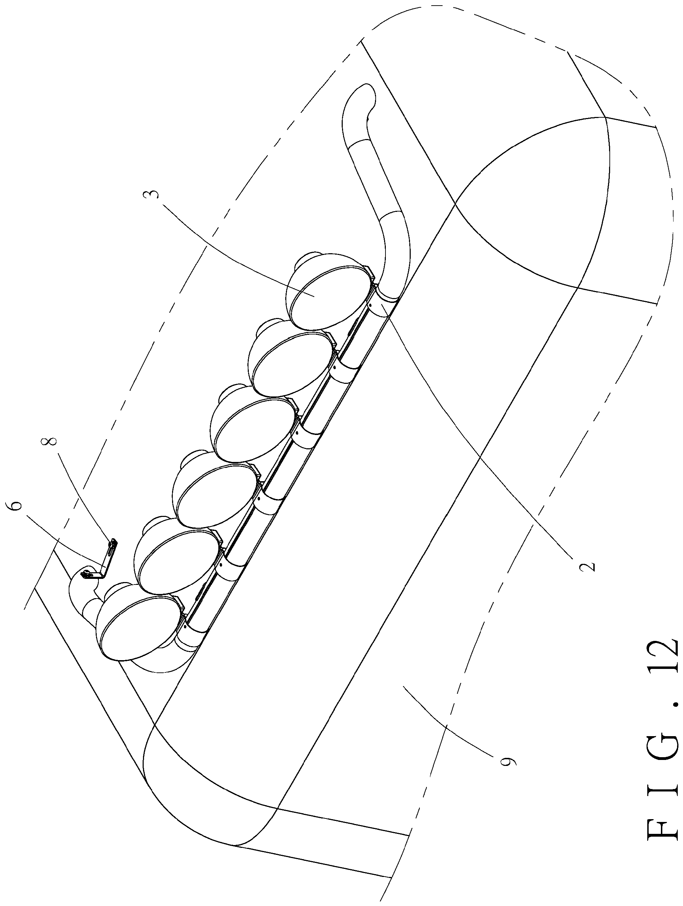

Please refer to FIG. 11 and FIG. 12. In the second embodiment of the present invention, the vehicle light 3 is first assembled and mounted to the bracket structure, and the vehicle light 3 is adjusted to a desired second position P2. The difference from the first embodiment is that the bracket structure is mounted on the roof of the vehicle body 9 through the flat portions 52 of the first support members 5, and the side tubes 4 are fixed on both sides of the roof of the vehicle body 9 through the second support members 6. Thus, the vehicle lights 3 illuminate the road in front of the vehicle body 9, thereby increasing the field of vision while driving on the road and improving driving safety, or providing sufficient illumination in the process of operation.

## Claims

1. A vehicle light fixture adapted to be mounted to a vehicle body (9), comprising:
a bracket structure, including:
a front tube (1), extending along its axis (11) and having two opposite ends;
two side tubes (4), disposed at the two opposite ends of the front tube (1), at least one of the two side tubes (4) being detachably connected to one of the two opposite ends of the front tube (1);
at least one support member, disposed on the front tube (1) for fixing the front tube (1) to the vehicle body (9) via the support member;
at least one vehicle light (3), disposed on the front tube (1),
wherein the two side tubes (4) are detachably connected to the two opposite ends of the front tube (1), respectively,
**characterised in that**
the front tube (1) is a hollow circular tube, the front tube (1) has a groove (14), the groove (14) extends along the axis (11); the bracket structure further comprises at least one tube fastener (2), the tube fastener (2) has a sleeve portion (21) and a locking portion (22) connected to the sleeve portion (21), a protrusion (211) is disposed on an inner wall of the sleeve portion (21), the sleeve portion (21) of the tube fastener (2) is sleeved on the front tube (1), the protrusion (211) is inserted in the groove (14), the tube fastener (2) is adjustable in position, the vehicle light (3) is locked to the locking portion (22), and the sleeve portion (21) is tightened on the front tube (1) by the locking portion (22).

2. The vehicle light fixture as claimed in claim 1, wherein the at least one of the two side tubes (4) has an opening, the one of the two opposite ends of the front tube (1) is inserted into the opening for the at least one of the two side tubes (4) to be detachably connected to the one of the two opposite ends of the front tube (1).

3. The vehicle light fixture as claimed in claim 2, wherein the one of the two opposite ends of the front tube (1) has an engaging groove (13), the engaging groove (13) has an L shape, the engaging groove (13) includes a guide portion (131) and an engaging portion (132) communicating with the guide portion (131), a protruding block (43) is disposed on the at least one of the two side tubes (4) and is adjacent to the opening; when the one of the two opposite ends of the front tube (1) is inserted in the opening, the protruding block (43) is moved along the guide portion (131) to be engaged in the engaging portion (132), so that the at least one of the two side tubes (4) is detachably connected to the one of the two opposite ends of the front tube (1).

## Patentansprüche

1. Eine Fahrzeugleuchte, die an einer Fahrzeugkarosserie (9) montiert werden kann, umfassend:
einen Halterungsaufbau, umfassend:
ein vorderes Rohr (1), das sich entlang seiner Achse (11) erstreckt und zwei gegenüberliegende Enden aufweist;
zwei seitliche Rohre (4), die an den beiden gegenüberliegenden Enden des vorderen Rohrs (1) angeordnet sind, wobei mindestens eines der beiden seitlichen Rohre (4) lösbar an einem der beiden gegenüberliegenden Enden des vorderen Rohrs (1) befestigt ist;
mindestens ein Stützelement, das auf dem vorderen Rohr (1) angeordnet ist, um das vordere Rohr (1) mit dem Stützelement an der Fahrzeugkarosserie (9) zu befestigen;
mindestens eine Fahrzeuglampe (3), die auf dem vorderen Rohr (1) angeordnet ist,
wobei die beiden seitlichen Rohre (4) jeweils an den beiden gegenüberliegenden Enden des vorderen Rohrs (1) abnehmbar befestigt sind,
**dadurch gekennzeichnet, dass**
das vordere Rohr (1) ein hohles Rundrohr ist, das vordere Rohr (1) eine Rille (14) aufweist, wobei sich die Rille (14) entlang der Achse (11) erstreckt; der Halterungsaufbau außerdem mindestens einen Rohrverschluss (2) umfasst, der Rohrverschluss (2) einen Hülsenteil (21) und einen am Hülsenteil (21) befestigten Verriegelungsteil (22) aufweist, ein Vorsprung (211) an einer Innenwand des Hülsenteils (21) angeordnet ist, der Hülsenteil (21) des Rohrverschlusses (2) auf das vordere Rohr (1) aufgeschoben ist, der Vorsprung (211) in die Rille (14) eingesetzt ist, der Rohrverschluss (2) in ihrer Position verstellbar ist, die Fahrzeuglampe (3) mit dem Verriegelungsteil (22) verriegelt ist, wobei der Hülsenteil (21) durch den Verriegelungsteil (22) auf dem vorderen Rohr (1) festgezogen wird.

2. Die Fahrzeugleuchte nach Anspruch 1, wobei mindestens eines der beiden seitlichen Rohre (4) eine Öffnung aufweist, das eine der beiden gegenüberliegenden Enden des vorderen Rohrs (1) in die Öffnung für das mindestens eine der beiden seitlichen Rohre (4) eingeführt ist, um am einen der beiden gegenüberliegenden Enden des vorderen Rohrs (1) lösbar befestigt zu werden.

3. Die Fahrzeugleuchte nach Anspruch 2, wobei das eine der beiden gegenüberliegenden Enden des vorderen Rohrs (1) eine Einrastrille (13) aufweist, die Einrastrille (13) weist eine L-Form auf, die Einrastrille (13) einen Führungsteil (131) und einen Einrastteil (132) umfasst, der am Führungsteil (131) befestigt ist, ein vorstehender Block (43) an mindestens einem der beiden seitlichen Rohre (4) angeordnet ist und an die Öffnung grenzt;
wenn das eine der beiden gegenüberliegenden Enden des vorderen Rohrs (1) in die Öffnung eingeführt wird, der vorstehende Block (43) entlang des Führungsteils (131) bewegt wird, um in den Einrastteil (132) einzugreifen, so dass das mindestens eine der beiden seitlichen Rohre (4) lösbar an einen der beiden gegenüberliegenden Enden des vorderen Rohrs (1) befestigt wird.

## Revendications

1. Dispositif d'éclairage pour véhicule adapté pour être monté sur une carrosserie de véhicule (9), **caractérisée par le fait qu'**il comprend :
une structure de support, comprenant :
un tube frontal (1), s'étendant le long de son axe (11) et comportant deux extrémités opposées ;
deux tubes latéraux (4), placés sur les deux extrémités opposées du tube frontal (1), au moins l'un des deux tubes latéraux (4) étant raccordé de manière amovible à l'une des deux extrémités opposées du tube frontal (1) ;
au moins un élément de support, placé sur le tube frontal (1) pour maintenir le tube frontal (1) sur la carrosserie du véhicule (9) par le biais de l'élément de support ;
au moins un feu de véhicule (3), placé sur le tube frontal (1),
les deux tubes latéraux (4) sont raccordés de manière amovible aux deux extrémités opposées du tube frontal (1), respectivement,
**caractérisé par le fait que**
le tube frontal (1) est un tube circulaire creux, le tube frontal (1) comporte une rainure (14), la rainure (14) s'étend le long de l'axe (11) ; la structure de support comprend en outre au moins une attache de tube (2), l'attache de tube (2) comporte une partie formant manchon (21) et une partie de verrouillage (22) raccordée à la partie formant manchon (21), une partie en saillie (211) est placée sur une paroi interne de la partie formant manchon (21), la partie formant manchon (21) de l'attache de tube (2) est emmanchée sur le tube frontal (1), la partie en saillie (211) est insérée dans la rainure (14), l'attache de tube (2) est réglable en position, le feu de véhicule (3) est verrouillé sur la partie de verrouillage (22), et la partie formant manchon (21) est serrée sur le tube frontal (1) par la partie de verrouillage (22).

2. Dispositif d'éclairage pour véhicule selon la revendication 1, **caractérisé par le fait que** l'un au moins des deux tubes latéraux (4) comporte une ouverture, l'une des deux extrémités opposées du tube frontal (1) est insérée dans l'ouverture pour qu'au moins l'un des deux tubes latéraux (4) soit raccordé de manière amovible à l'une des deux extrémités opposées du tube frontal (1).

3. Dispositif d'éclairage pour véhicule selon la revendication 2, **caractérisé par le fait que** l'une des deux extrémités opposées du tube frontal (1) comporte une rainure d'engagement (13), la rainure d'engagement (13) comporte une forme en L, la rainure d'engagement (13) comprend une partie de guidage (131) et une partie d'engagement (132) communiquant avec la partie de guidage (131), un bloc protubérant (43) est placé sur l'un au moins des deux tubes latéraux (4) et est adjacent à l'ouverture ;
lorsque l'une des deux extrémités opposées du tube frontal (1) est insérée dans l'ouverture, le bloc protubérant (43) est déplacé le long de la partie de guidage (131) pour être engagé dans la partie d'engagement (132), de sorte que l'un au moins des deux tubes latéraux (4) est raccordé de manière amovible à l'une des deux extrémités opposées du tube frontal (1).
